# EUROPEAN PATENT SPECIFICATION

(11) **EP 1 237 701 B1**
(45) Date of publication and mention of the grant of the patent: **23.08.2006**
(21) Application number: 00926724.6
(22) Date of filing: 15.05.2000
(51) Int. Cl.: B29C 45/16, B29C 45/33

(54) **MOULD WITH TURNABLE MIDDLE SECTION**
WERKZEUG MIT DREHBAREM MITTELTEIL
MOULE DOTE D'UNE PARTIE MEDIANE ROTATIVE

(30) Priority: 17.05.1999 DK 67099
(43) Date of publication of application: 11.09.2002
(73) Proprietor: GRAM, Jes Tougaard, DK-3460 Birkerod (DK)
(72) Inventor: GRAM, Jes Tougaard, DK-3460 Birkerod (DK)
(74) Representative: Jensen, Peter Kim
(86) International application number: PCT/DK2000/000261
(87) International publication number: WO 2000/073040

(56) References cited:
- WO-A1-98/35808
- WO-A1-98/38021
- JP-A- 63 135 214
- DATABASE WPI Week 199627, Derwent Publications Ltd., London, GB; AN 1996-263193 & JP 8 108 449 A (TSUNODA E.) 30 April 1996 & PATENT ABSTRACTS OF JAPAN & JP 08 108 449 A (TSUNODA EIICHI)
- DATABASE WPI Week 199028, Derwent Publications Ltd., London, GB; AN 1990-213737 & JP 2 143 819 A (STANLEY ELECTRIC CO LTD) 01 June 1990 & PATENT ABSTRACTS OF JAPAN & JP 02 143 819 A (STANLEY ELECTRIC CO LTD)

## Description

The invention concerns a method for the production of parts preferably of plastics, both one-component as well as multi-component.

Such a method is known from the applicant's own international patent publication No. WO 98/35808 and JP-A-02-143819.

JP 63 135 214 discloses a method for production of parts in a tool comprising a turnable middle section placed between two movable mould parts. The turnable middle part is supplied with an identification member after including of a first piece of a part. The identification member is covered by moulding a second piece of the part after turning the middle section 90°. The identification member is supplied while the mould is in an open position.

The until now described methods and machinery for the production of parts like this have various disadvantages or flaws. These are tried to be corrected with the method and machinery according to the invention. Hereby are also achieved a number of advantages and simplifications of the hitherto known molding processes, which considerably will be able to decrease the cycle-time and consequently the price of the finished parts.

The method according to the invention is characterized in that by the features stated in claim 1.

The turnable middle section of the tool preferably has a cross section with the outline of a square. The square can suitably have the corners cut off so a smaller opening of the mould will be sufficient to turn the middle section around. For the same reason the middle section can suitably be parted into two or more turnable mold parts. Besides the square or an adapted square the cross section of the turnable middle section can have the outline of a hexagon, an octagon or another polygon, where the two opposite placed sides are parallel.

The embodiment according to claim 7 allows for the provision of more inserted parts in the same finished part without these different inserted parts touching each other, eg. in that they are positioned closely together on top of each other, but are electrically insulated from each other.

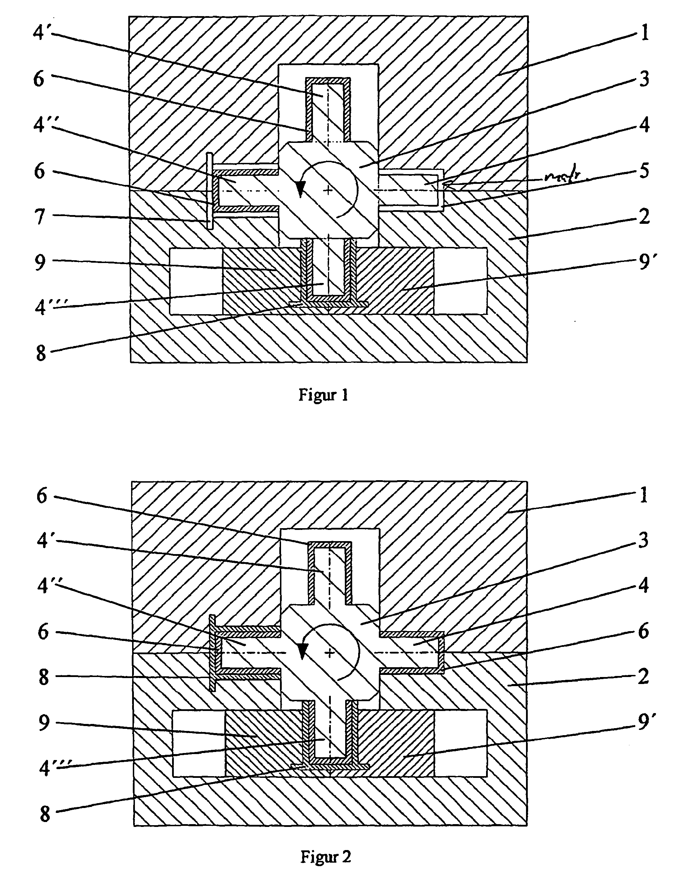

The various uses and advantages of the method and machinery according to the invention are specified under the description of the drawing. It should be noted that figs. 1 to 4 do not disclose a tool for carrying out the present invention and consequently primarily serve to elucidate the principles of tools having at least one turnable middle section arranged between two additional mold parts and to support the description of the embodiment according to the invention shown in figs. 5 and 6. On the drawings
fig. 1 shows a tool not being according to the invention in its first cycle of four phases seen from above in closed position,
fig. 2 shows the same in a following cycle also seen from above in closed position,

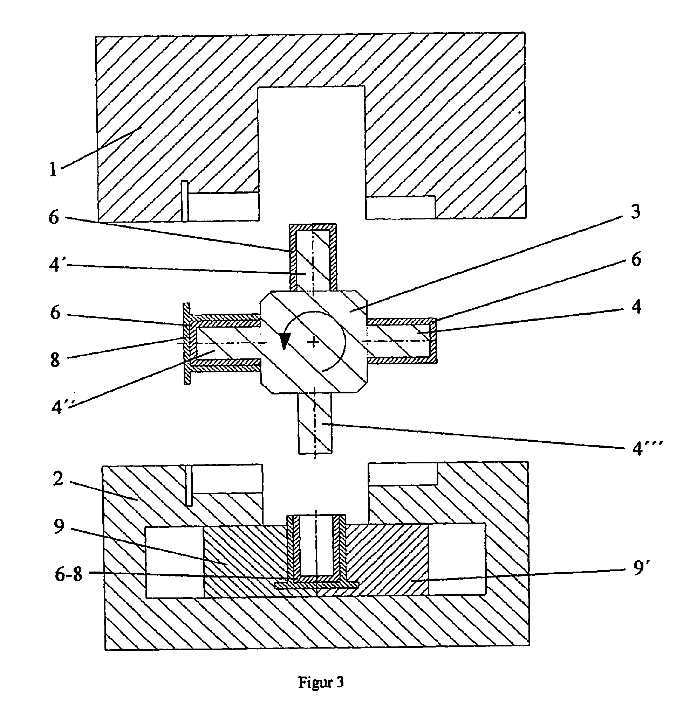

fig. 3 shows the same in open position, where the turning of 90 degrees in the direction of the arrows can take place,

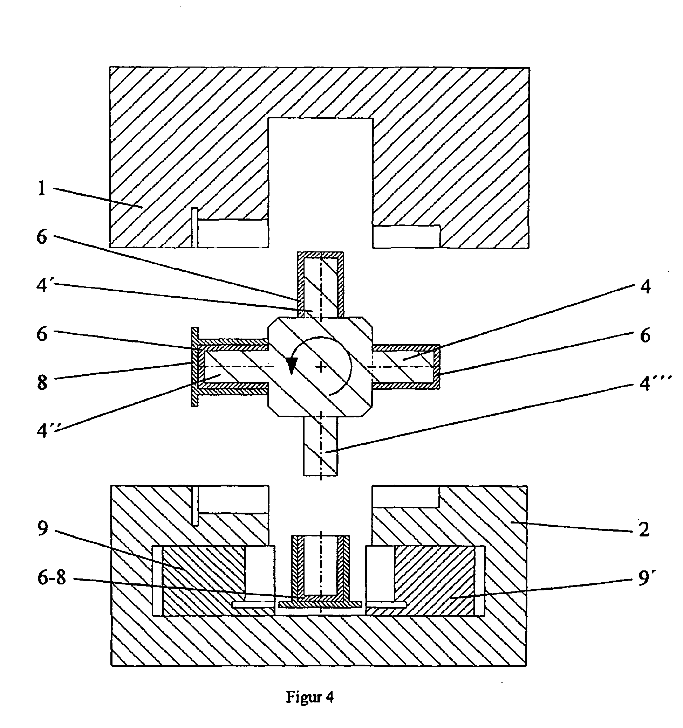

fig. 4 shows the same, where the jaws also are opened so that the finished combined parts are released,

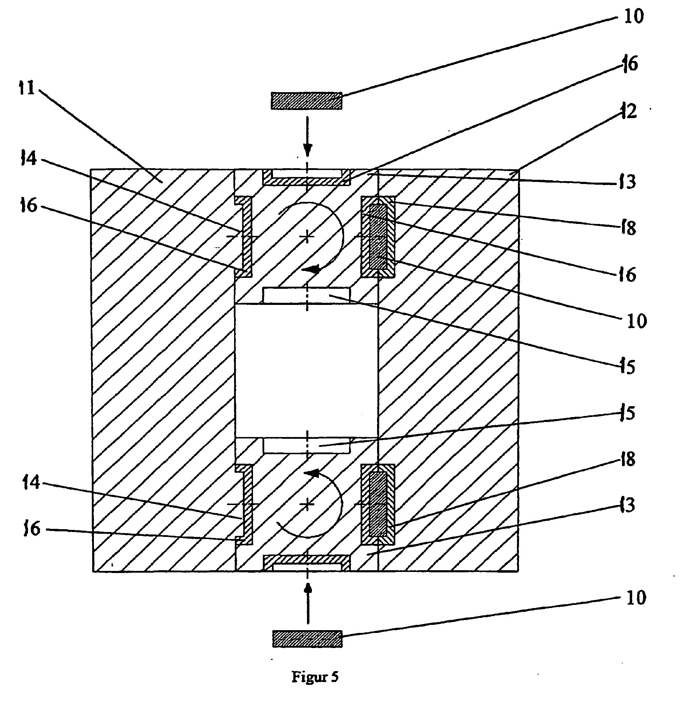

fig. 5 shows one for the inserting intended tool according to the invention with two turnable middle sections seen from above in closed position, and

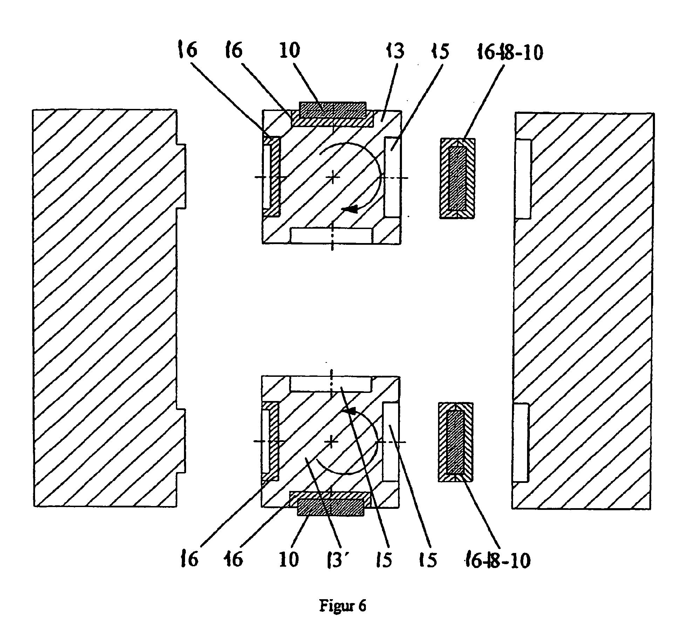

fig. 6 the same in open position.

In fig. 1 are shown a tool not being according to the invention for the two-component molding with the stationary mold part 1, the movable mold part 2 and the turnable middle section 3. On the turnable middle section 3 there is on each of the four sides placed a core, which positions in the four phases of the molding, respectively, are marked as 4, 4', 4" and 4'''. In the beginning of the first phase a core is placed in position 4 at the right and situated in the cavity 5 between the stationary mold part 1 and the movable mold part 2. In the second phase the placing of the core is in the top position 4', where there in the mold cavity is molded the inner piece 6 of the part. In the third phase, where the core is in a position 4" at the left on the figure, the molded piece 6 of the part is still placed on it. The molded and cooled piece 6 of the part now serves as a part of the mold, namely as the inner parting line of the cavity for the next piece 8 of the part in connection with the outer mold cavity 7. In the fourth and the last phase of the start, in which the core is in its lowest position 4"', the final molding of the next piece 8 of the part has taken place in the outer mold cavity 7. In the movable mold part 2 are noticed the two jaw parts 9 and 9', which at their later opening makes the ejection of the then complete molded combined part 6-8 possible, but which here has caught and still is holding this. But as it will be seen from the figure, there is plenty of space for placing e. g. hot runners, preferably in the stationary mould part 1 as in the ordinary molding tools.

Fig. 2 shows the same tool in closed position in one of the cycles that follows after the first cycle shown on fig. 1. In the phase to the right on the core there is in the mould cavity molded the innermost placed piece 6 of the parts. In the top position this piece 6 of the parts is cooled so that it in the phase at the left, where the position of the core is 4", can serve as a part of the mould outline for the final molding of the next piece 8 of the part. In the phase at the lowest point of the figure with the core in position 4''' is seen the finished molded combined part 6-8 ready for ejection by the use of the two built in jaw parts 9 and 9'.

On fig. 3 is shown the same tool in open position, where the turnable middle section 3 is able to perform its repeated 90 degrees turnings. It concerns the same four phases with the respective placements 4, 4', 4"and 4''' of the cores as in the other figures. It shall be noticed that in the finishing lowest position 4''' is the finished molded combined part 6-8 removed from its core by the use of the two jaws 9 and 9' which is not yet opened. In this way it is avoided to place any ejectors in the middle section 3 and maybe completely avoiding the use of ejectors in the tool. This design is a great simplifying of the construction of the tool, as well as the opening distance and the build-in height in this way can be minimized in relation to tools with traditional ejectors. But in other cases more traditional ejectors can be used to the tools according to the invention.

Fig. 4 shows the same tool in open position, where the difference from fig. 3 is that the jaws 9 and 9' are opened, so that the final ejection of the finished combined part 6-8 has been able to take place. This can e. g. be realized by the ejectors (not shown in the drawings) being placed under the jaws 9 and 9' or by using compressed air.

On the fig. 5 is from above shown a solution according to the invention, namely where the tool according to the invention is used for the insertion of e. g. metal parts. In the closed tool consisting of the stationary mold part 11 and the movable mold part 12 is shown the two uniform turnable middle sections 13 and 13', which here rotates in opposite directions for the benefit of the balance of the mold. If only the upper part of the middle section is considered you see in the lowest phase the empty mold cavity 15 in the middle section 13. In the next phase at the left on the figure this mold cavity 15 serves in connection with the core 14 from the mold part 11 for the molding of the first piece 16 of the plastic part. In the upper phase the part 10 to be inserted is added to the piece 16. This can take place while the mold is still closed, which saves time. In the last phase at the right is the last piece 18 of the plastic part molded on, so that the metal part 10 now is firmly encapsulated in the plastic.

In fig. 6 is shown the same tool in open position where the finished in-molded part 16, 10, 18 can be ejected after which the process can proceed continuously.

That on figs. 5 and 6 of the drawings shown is only an example of how this invention can be transformed into functioning tools. A long row of other designs of the tool according to the invention can be imagined, but the shown example should be sufficient to show the fundamental principles of the invention.

## Claims

1. Method for production of parts (16,18,10) preferably of plastics, both one-component as well as multi-component, in a tool equipped with a stationary mold part (11), a movable mold part (12) and at least one turnable middle section (13) turnable about an axis being perpendicular to the closing direction of the tool and having a cross-section with an outline of a polygon with pairs of mutually parallel opposite sides, the tool having an open position and a closed position, in which latter position one of the pairs of mutually parallel sides of the turnable middle section is placed at a right angle to the closing direction of the tool and another pair of mutually parallel sides of the turnable middle section is not placed at a right angle to the closing direction of the tool, the turnable middle section (13) being supplied with material by inserting a special part (10) at at least one of the sides of the turnable middle section (13), which is not placed at a right angle to the closing direction of the tool, the inserting taking place while the tool is in its closed position.

2. Method according to claim 1, **characterized in that** the inserting takes place on at least two non-mutually parallel sides of the turnable middle section (13).

3. Method according to at least one of the previous claims, **characterized in that** the inserting takes place on two substantially mutually parallel sides of the turnable middle section (13).

4. Method according to at least one of the previous claims, **characterized in that** the corners of the polygonal cross-sectional outline of the middle section are cut off to minimize the opening movement of the tool.

5. Method according to at least one of the previous claims, **characterized in that** in a first molding operation the turnable middle section (13) and the stationary mold part (12) provide a piece (16) of a part adapted to receive a part (10) to be inserted and retain the latter under a following molding operation of a locking piece (18).

6. Method according to at least one of the previous claims, **characterized in that** the turnable middle section (3) is designed in such a way that parts (10) intended for insertion are supplied at more than one station, preferably with moldings in between.

## Patentansprüche

1. Verfahren zur Herstellung von Bauteilen (16, 18, 10) vorzugsweise aus Kunststoff, die jeweils sowohl aus einer als auch mehreren Komponenten bestehen, in einem Werkzeug, das mit einem stationären Formteil (11), einem beweglichen Formteil (12) und wenigstens einem drehbaren Mittelteil (13), das um eine Achse drehbar ist, die rechtwinklig zu der Schließrichtung des Werkzeugs verläuft, und das einen Querschnitt mit einer Kontur eines Polygons mit Paaren von zueinander parallelen entgegengesetzten Seiten aufweist, ausgestattet ist, wobei das Werkzeug eine offene Position und eine geschlossene Position umfasst, wobei in der geschlossenen Position eines der Paare der zueinander parallelen Seiten des drehbaren Mittelteils rechtwinklig zur Schließrichtung des Werkzeugs angeordnet und ein anderes Paar der zueinander parallelen Seiten des drehbaren Mittelteils nicht rechtwinklig zur Schließrichtung des Werkzeugs angeordnet ist, und wobei das drehbare Mittelteil mit Material durch Einführen eines speziellen Teils (10) an wenigstens einer der Seiten des drehbaren Mittelteils (13) versorgt wird, die nicht rechtwinklig zur Schließrichtung des Werkzeugs angeordnet ist, wobei das Einführen ausgeführt wird, wenn das Werkzeug sich in seiner geschlossenen Position befindet.

2. Verfahren gemäß Anspruch 1, **dadurch gekennzeichnet, dass** das Einführen an wenigstens zwei nicht zueinander parallelen Seiten des drehbaren Mittelteils (13) ausgeführt wird.

3. Verfahren gemäß einem der vorangehenden Ansprüche, **dadurch gekennzeichnet, dass** das Einführen an zwei zueinander im wesentlichen parallelen Seiten des drehbaren Mittelteils (13) ausgeführt wird.

4. Verfahren gemäß wenigstens einem der vorangehenden Ansprüche, **dadurch gekennzeichnet, dass** die Ecken der polygonalen Querschnittkontur des Mittelteils abgetrennt sind, um die Öffnungsbewegung des Werkzeugs zu verringern.

5. Verfahren gemäß wenigstens einem der vorangehenden Ansprüche, **dadurch gekennzeichnet, dass** in einem ersten Formschritt das drehbare Mittelteil (13) und das stationäre Formteil (12) ein Teil (16) eines Elements bereitstellen, das so ausgebildet ist, dass es ein einzuführendes Teil (10) aufnehmen kann und dies in einem folgenden Formschritt zur Bildung eines Riegelteils (18) hält.

6. Verfahren gemäß wenigstens einem der vorangehenden Ansprüche, **dadurch gekennzeichnet, dass** das drehbare Mittelteil (3) derart ausgelegt ist, dass Teile (10), die eingeführt werden sollen, an mehr als einer Station, vorzugsweise mit Formteilen zwischen diesen, zugeführt werden.

## Revendications

1. Procédé de production de pièces (16, 18, 10) de préférence en matière plastique, d'un ou de plusieurs composants, dans un outil équipé d'une partie de moule fixe (11), d'une partie de moule mobile (12) et d'au moins une partie médiane rotative (13) susceptible de tourner autour d'un axe perpendiculaire au sens de fermeture de l'outil et ayant une section transversale avec un contour sous forme de polygone avec des paires de côtés mutuellement parallèles, l'outil ayant une position ouverte et une position fermée, dans laquelle dernière position une des paires de côtés mutuellement parallèles de la partie médiane rotative est placée à angle droit par rapport au sens de fermeture de l'outil et une autre paire de côtés mutuellement parallèles de la partie médiane rotative n'est pas placée à angle droit par rapport au sens de fermeture de l'outil, la partie médiane rotative (13) étant alimentée en matériau par insertion d'une pièce spéciale (10) au niveau d'au moins un des côtés de la partie médiane rotative (13), qui n'est pas placé en angle droit par rapport au sens de fermeture de l'outil, l'insertion ayant lieu pendant que l'outil est dans sa position fermée.

2. Procédé selon la revendication 1, **caractérisé en ce que** l'insertion a lieu sur au moins deux côtés de la partie médiane rotative (13) qui ne sont pas mutuellement parallèles.

3. Procédé selon l'une au moins des revendications précédentes, **caractérisé en ce que** l'insertion a lieu sur deux côtés sensiblement mutuellement parallèles de la partie médiane rotative (13).

4. Procédé selon l'une au moins des revendications précédentes, **caractérisé en ce que** les angles du contour polygonal en section transversale de la partie médiane sont découpés pour minimiser le mouvement d'ouverture de l'outil.

5. Procédé selon l'une au moins des revendications précédentes, **caractérisé en ce qu'**au cours d'une première opération de moulage, la partie médiane rotative (13) et la partie de moule fixe (12) fournissent une partie (16) d'une pièce adaptée pour recevoir une pièce (10) à insérer, et retiennent cette dernière sous une opération de moulage subséquente d'une pièce de verrouillage (18).

6. Procédé selon l'une au moins des revendications précédentes, **caractérisé en ce que** la partie médiane rotative (3) est conçue de manière à ce que les pièces (10) prévues pour l'insertion soient fournies à plus d'un poste, de préférence avec des moulages entre celles-ci.
